# EUROPEAN PATENT SPECIFICATION

(11) **EP 1 196 738 B1**
(45) Date of publication and mention of the grant of the patent: **30.07.2003**
(21) Application number: 00935475.4
(22) Date of filing: 19.05.2000
(51) Int. Cl.: G01B 11/00

(54) **DUST REMOVAL AND ANTI-SHOCK PROTECTION DEVICE FOR OPTICAL GAUGES**
STAUBENTSORGUNGS -UND SCHOCKPROTEKTIONSVORRICHTUNG FÜR OPTISCHE EICHVORRICHTUNGEN
DISPOSITIF DE PROTECTION ET ANTI-POUSSIERE POUR ETALONS OPTIQUES

(30) Priority: 24.05.1999 IT TS990008 U
(43) Date of publication of application: 17.04.2002
(73) Proprietor: AEROEL S.r.l., I-33040 Pradamano (UD) (IT)
(72) Inventor: SPIZZAMIGLIO, Antonio, Fraz. Lumignacco, 33050 Pavia di Udine (IT)
(86) International application number: IT0000210
(87) International publication number: WO00071969

(56) References cited:
- GB-A- 2 239 413

## Description

### Technical Field

The present disclosure relates to a device aimed at protecting the optical portion of optical gauges against the impacts of the item to be measured, as well as at preventing flying impurities from gradually building up in the measurement area and on exposed optical surfaces.

### Background Art

The exposed optical surfaces and, more in general, the measurement area of any optical measurement system, such as those which use laser light, should be perfectly clean. This is an inherent characteristic of the use of light sources because the light beam which is generated is then collimated on the item to be measured. The portion thereof which does not strike the item is collected by a receiving electronic device located behind the item itself.

Given that an essentially parallel and high-intensity beam is used, it is obvious that any build-up of particles of dirtiness, fine dust, flying machining dross or alike in the measurement area, or on the exposed optical surfaces of the gauge, may intercept and/or deviate a portion of said beam, and impair a proper measurement.

Various devices which try to solve this problem are known. They use filtered compressed air which is blown upon the whole measurement area, or upon the exposed optical surfaces of the gauge, so as to try and create an overpressure around them and, therefore, to prevent flying impurities from accessing the measurement area or from building up on optical surfaces.

However, said devices are only partially effective because they cannot prevent all impurities from accessing the protected areas. Therefore, in the long run, impurities build up and such a build-up increases progressively until it impairs the proper working of the instrument.

Hence, the operator has to stop the measurement process periodically in order to clean the exposed optical surfaces of the gauge and restarting it.

This implies a waste of time, a significant slowdown in measurement procedures, and, last but not least, an increase in manufacturing costs. This holds true especially when the instrument is used as a process controller in a production line which also includes drawing, rolling or extrusion.

One of these device is described into GB 2 239 413. The cleaning of the optical passage is obtained by directing air over the rolled section in an upstream direction through a first ring nozzles associated with the entry guide and in a downstream direction through a second ring nozzles associated with the exit guide. exit guide. The optical passage is therefore pressurized while the external zone is depressurized by an action of suction.

But if coolant or impurities enter into the apparatus and they can settle on the optical windows it is not possible to clear them and the optical windows are progressively blinded.

### Disclosure of the Invention

The object of this invention is to obtain a device which is able to protect optical gauges against the impacts of the item to be measured, but above all to prevent flying impurities from building up beyond a certain amount in the measurement area and on exposed optical surfaces.

This object and other objects of this invention are achieved by the device according to this invention which may be used in industrial environments where a continuous product is manufactured (hot/cold-drawn and/or hot/cold-rolled) by machines which generate impurities or dry scales and/or where dry lubricants are used. This device is fastened to a known optical gauge so as to occupy its measurement area.

The device according to this invention essentially comprises a body and a compressed air dispenser. Said body and said compressed air dispenser may be manufactured in one piece or in two elements which are then assembled by screws, welded, embedded, glued or by means of any other known system.

The body, which supports the compressed air dispenser, has one or more slots to let the reading light beam pass through and a cavity axial to the item to be measured. The compressed air dispenser is located upstream the optical portion of the gauge and close to it. It comprises a ring which protects the optical portion of the gauge against the impacts of the item to be measured, one or more hubs which are connected by pipes to a centrifugal fan, or to any other type of compressed air generator, and at least an air outflow chamber which, regardless of its inner layout, is flattened at the outlet so as to create a preferably quadrangular outlet window with two sides much longer than the other sides. The inner layout of each chamber is preferably cone-shaped, the base of the cone being directed toward the optical elements of the gauge. The chamber may also have an inner layout other than the cone-shaped one. However, its shape should always ensure an increase in the outgoing air speed and should always make this flow of air tangent and/or parallel to the optical surfaces to be cleaned.

The protection ring is axial to the item to be measured. It is located upstream the cavity of the body and axially to it. The compressed air outflow chambers are located around the cavity. The chambers, which may also be arranged in a row, and the hubs communicate through holes. An air conditioning system may be used in order to increase or to decrease the temperature in the measurement area.

Thanks to the inner layout of the chambers, the filtered airflow coming from the centrifugal fan, or from any other compressed air generator, turns into a laminar flow at the outlet windows of the chambers. This flow is blown upon the outer optical elements tangentially and/or parallelly so as to constantly remove the impurities which tend to build up on their optical surfaces. This entails a cleaning effect which ensures a long-term proper operation of the gauge. The flow direction is the same as the product feed direction.

To prevent any machining dross projected by the moving product (which usually is fed at 5-30 m/sec), as well as any other foreign matter transported by it, from accessing the measurement area, the product is cleaned by a commercially available cleaning apparatus before it enters the device according to this invention. Said apparatus is located upstream the device according to this invention and may be fastened to it or not.

Said known cleaning apparatus essentially comprises a Venturi tube which uses the energy of a small volume of compressed air coming from a compressor to produce a high-speed, high-volume and low-pressure outgoing airflow. The direction of this airflow, which is forced by said cleaning apparatus, is opposite to the product feed direction.

### Brief Description of Drawings

The additional features and advantages of the present invention are described in more detail below, in connection to a preferred embodiment thereof, which is shown by example and not in a limiting way with reference to the accompanying drawings, in which:

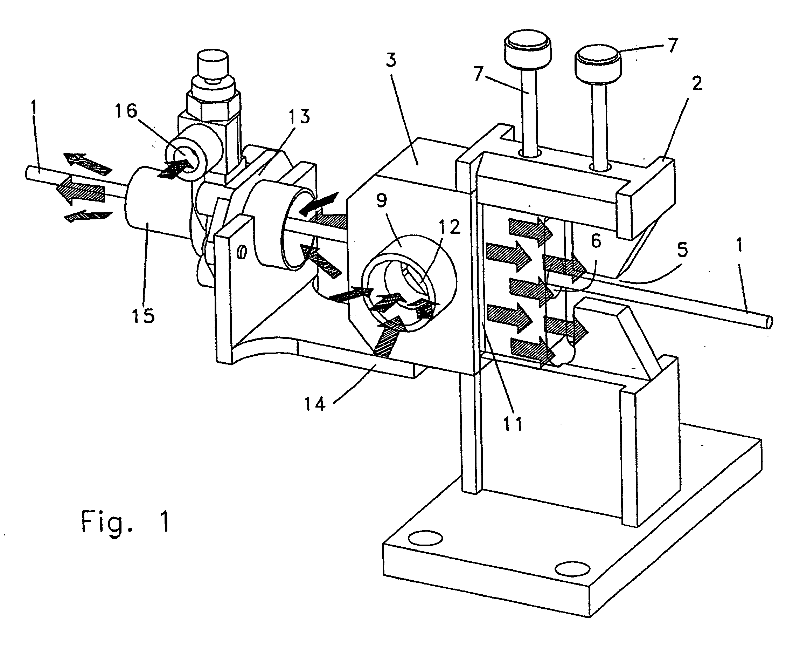

- figure 1 is a perspective view of the device and of the cleaning apparatus;

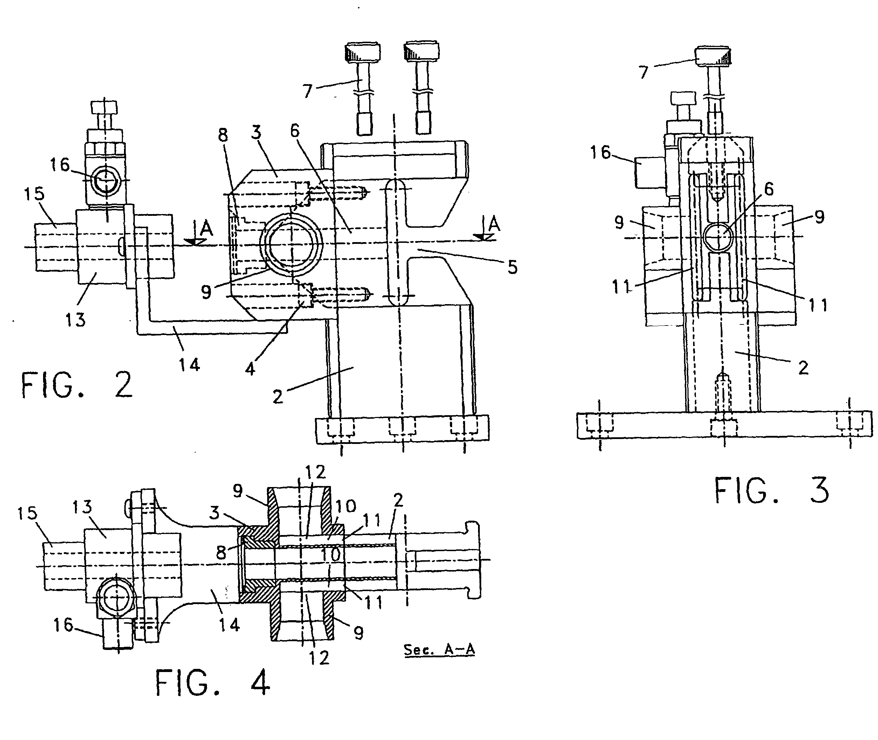

- figure 2 is a side view of the device and of the cleaning apparatus;
- figure 3 is a front view of the device and of the cleaning apparatus;
- figure 4 is a top view (with a partial cross-section of the device along the A-A plane) of the device and of the cleaning apparatus;

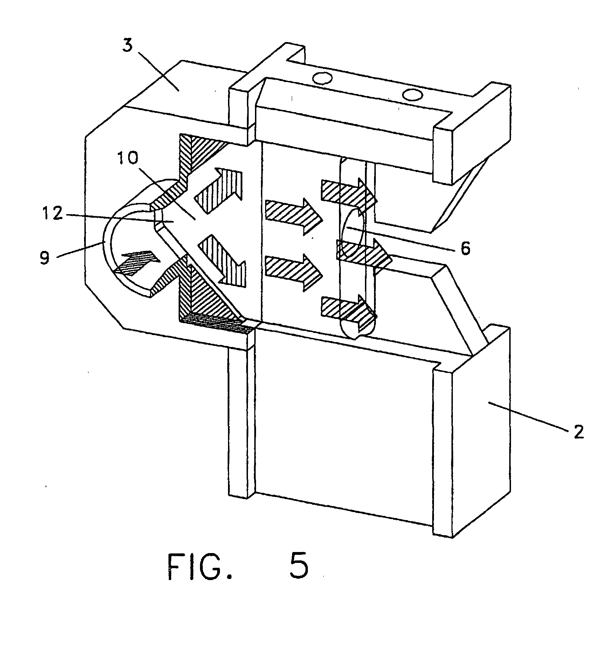

- figure 5 is a perspective view of the device; the side wall of one of its air outflow chambers has been partially removed to show in a clearer manner its inner layout;

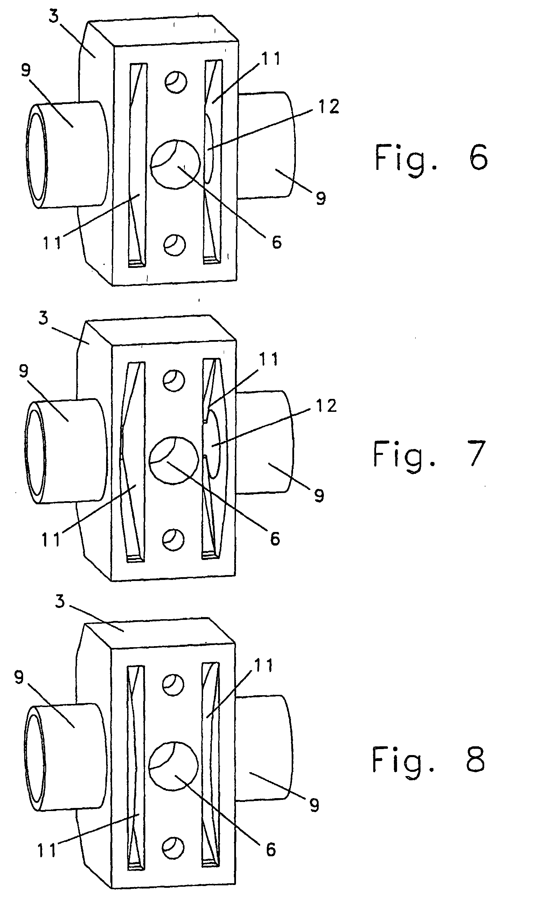

- figures 6, 7 and 8 show various possible layouts of the air outflow chambers of the device according to this invention.

### Best Mode for Carrying Out the Invention

More in particular and with reference to the enclosed drawings, the device according to the present invention Is used together with a known laser gauge to measure a continuous hot/cold-drawn and/or hot/cold-rolled wire 1.

Said device comprises a body 2 and a compressed air dispenser 3. The body 2 and the compressed air dispenser 3 are attached by screws 4.

The body 2 supports the compressed air dispenser 3 and it has a T-shaped slot 5 to let the reading light beam pass through. Moreover, it has a cylindrical cavity 6 which is axial to the wire 1 to be measured. The body 2 is attached to the optical gauge by screws 7, the gauge being already fitted in the relevant measurement area.

The compressed air dispenser 3 is upstream the optical portion of the gauge and close to it. The compressed air dispenser 3 comprises a ring 8 to protect the optical portion of the gauge against the impacts of the wire 1 to be measured, two hubs 9, being connected to a centrifugal fan by pipes, and two air outflow chambers 10. The chambers 10 are flattened parallelepipeds so that they form quadrangular outlet windows 11, whose two vertical sides are much longer than the two horizontal sides. Each chamber 10 has an inner conical section, whose base is directed toward the optical elements of the gauge.

The protection ring 8 is located at the centre of the compressed air dispenser 3 and it is axial to the wire 1. It is located upstream the cylindrical cavity 6 of the body 2 and it is axial to it. At either sides of the cavity 6, and symmetrically to it, there are two said compressed air outflow chambers 10, whose longitudinal axe is tangent to the exposed optical surfaces of the gauge. The chambers 10 and the hubs 9 communicate through holes 12.

A commercially available cleaning apparatus 13 is located upstream the device according to this invention and it is attached to it by a bracket 14. It is fitted with a Venturi tube 15 which is located centrally and axially to the wire 1. The air coming from a compressor enters said tube 15 through a hub 16.

Thanks to the shape of the tube 15, a high-speed, high-volume and low-pressure outgoing flow is generated, whose direction is opposite to the wire 1 feed direction.

After removing any machining dross or any other impurity transported by the wire 1 with the cleaning apparatus 13, the wire 1 passes through the device according to this invention and, more specifically, through the protection ring 8 and through the cylindrical cavity 6. Even if the wire 1 breaks, the optical portion of the gauge does not suffer any damage since it is protected by said protection ring 8 and by said cylindrical cavity 6.

Next, the wire 1 passes through the T-shaped slot 5, where it is struck by the laser beam. This area and the optical instruments which are located within this area are cleaned by the airflow coming from the chambers 10. In more detail, the air coming from the centrifugal fan reaches the hubs 9.

From here, through the holes 12, it enters the chambers 10. Thanks to inner layout of said chambers 10, the filtered airflow coming from the fan is turned into a laminar flow at the two outlet windows 11 thereof. This flow, whose direction is the same as the wire 1 feed direction, blows upon the outer optical elements tangentially and keeps them clean, thus ensuring a long-term proper operation of the gauge without any need to clean it.

## Claims

1. A dust removal and anti-shock protection device for optical gauges for measuring a moving item, for being fastened to an optical gauge and for being used together with a cleaning apparatus (13) located upstream the device, the device comprising a body (2) and a compressed air dispenser (3), the body (2) being suitable to be fastened to the optical gauge by means of screws (7), or to be embedded in the gauge, and having at least one slot (5) for letting the measuring light beam pass through and a cavity (6) for letting the item to be measured pass through; the device being **characterised by**:
said compressed air dispenser (3) being suitable to be located upstream the optical portion of the gauge and comprising a ring (8) located upstream the cavity (6) of the body (2) and axial to it, the ring (8) being suitable for letting the item to be measured pass through for protecting said optical portion against the impacts of said item;
at least one hub (9), and at least one air outflow chamber (10) being located around said cavity (6) and communicating with the hub (9) through a hole (12); each of the at least one hubs (9) being connected by pipes to a compressed air generator and able to be connected to an air-conditioning system; each of the at least one chambers (10) having an elongated quadrangular outlet window (11) and an inner layout for converting the filtered airflow coming from the compressed air generator into a laminar flow parallel to the item feed direction and blowing upon the outer optical surfaces of the gauge tangentially and/or parallelly to them.

2. A device according to claim 1, **characterised in that** the body (2) and the compressed air dispenser (3) being fastened by screws (4) or welded, embedded or glued.

3. A device according to claim 1, **characterised in that** the body (2) and the compressed air dispenser (3) being manufactured in one piece.

4. A device according to claim 1, **characterised in that** the inner layout of each chamber (10) is cone-shaped with the base of the cone being directed toward the optical elements of the gauge.

## Patentansprüche

1. Eine Staubentsorgungs- und Schockprotektionsvorrichtung für optische Eichvorrichtungen, die einen sich bewegenden Gegenstand eichen, so daß diese an einen optischen Eichmesser befestigt und zusammen mit einem Entsorgungsapparat (13) benutzt werden können, der sich mit Bezug auf die Vorrichtung in Aufwärtsrichtung befindet; die Vorrichtung ist mit einem Korpus (2) und einem Druckluftspender (3) ausgestattet; der Korpus (2) eignet sich dazu mittels von Schrauben (7) an den optischen Eichmesser befestigt, beziehungsweise im Eichmesser eingebettet zu werden, und ist zumindest mit einer Rille (5) für den Durchlaß des eichenden Lichtstrahls und mit einem Hohlraum (6) für den Durchlaß des zu eichenden Gegenstands ausgestattet; die Vorrichtung wird charakterisiert durch:
den genannten Druckluftspender (3), der sich dazu eignet mit Bezug auf die optische Portion des Eichmesser aufwärts gelegen zu sein und mit einem Ring (8) ausgestattet ist, der in Bezug auf den Hohlraum (6) des Korpus (2) aufwärts und axial gelegen ist; der Ring (8) eignet sich zum Durchlaß des zu eichenden Gegenstands, um die genannte optische Portion vor dem Aufprall mit dem genannten Gegenstand zu schützen;
Zumindest eine Nabe (9), und zumindest eine Kammer für den Luftauslaß (10), die sich um den genannten Hohlraum (6) befindet und sich durch eine Öffnung (12) mit der Nabe (9) verständigt; jede Nabe (9) ist mittels von Rohren an einen Drucklufterzeuger vereinigt, und imstande an eine Klimaanlage befestigt zu werden; jede Kammer (10) ist mit ein lang ausgezogenes und viereckiges Auslaßfenster ausgestattet; die innere Struktur dient der Konversion des gefilterten Luftflusses, der vom Drucklufterzeuger strömt, in einen lamellaren Fluß, der parallel in Bezug auf die Vorschubsrichtung des Gegenstands ist und gerade und/oder parallel auf die äußeren optischen Flächen des Eichmessers strömt.

2. Eine Vorrichtung, wie laut Patentanspruch 1, charakterisiert dadurch, daß der Korpus (2) und der Druckluftspender (3) durch Schrauben (4) befestigt, beziehungsweise geschweißt, eingebettet oder gesichert sind.

3. Eine Vorrichtung, wie laut Patentanspruch 1, charakterisiert dadurch, daß der Korpus (2) und der Druckluftspender (3) aus einem einzigen Element hergestellt sind.

4. Eine Vorrichtung, wie laut Patentanspruch 1, charakterisiert dadurch, daß die innere Struktur jeder Kammer (10) konusförmig ist, und der Konusansatz in Richtung der optischen Elemente des Eichmessers gerichtet ist.

## Revendications

1. Un dispositif de protection et anti-poussiere pour etalons optiques servant à mesurer un objet en mouvement, apte à être fixé à un étalon optique et à être utilisé avec un appareil de nettoyage (13) situé en amont du dispositif, ledit dispositif comprenant un corps (2) et un distributeur d'air comprimé (3), le corps (2) étant apte à être fixé à l'étalon optique à l'aide de vis (7) ou à être incorporé dans l'étalon, et ayant au moins une fente (5) permettant le passage du rayon lumineux de mesure et une cavité (6) assurant le passage de l'objet à mesurer; le dispositif étant **caractérisé en ce qu'**il comprend:
ledit distributeur d'air comprimé (3) étant apte à être situé en amont de la partie optique de l'étalon et comprenant un anneau (8) situé en amont de la cavité (6) du corps (2) et axial par rapport à ladite cavité, l'anneau (8) étant apte à permettre le passage de l'objet à mesurer afin de protéger ladite partie optique contre les impacts dudit objet;
au moins un moyeu (9) et au moins une chambre de sortie d'air (10) étant située autour de ladite cavité (6) et communiquant avec le moyeu (9) à travers un trou (12); chacun des moyeux (9) - dont au moins un doit être présent - étant relié à l'aide de tuyaux à un générateur d'air comprimé et étant en mesure d'être relié à un système de conditionnement de l'air;
chacune des chambres (10) - dont au moins une doit être présente - ayant une fenêtre de sortie quadrangulaire allongée (11) et une configuration interne permettant la conversion du flux d'air filtré provenant du générateur d'air comprimé en un flux laminaire parallèle à la direction d'avance de l'objet et soufflant sur les surfaces optiques externes de l'étalon de manière tangentielle et/ou parallèle aux dites surfaces.

2. Un dispositif suivant la revendication 1, **caractérisé en ce que** le corps (2) et le distributeur d'air comprimé (3) sont fixés à l'aide de vis (4) ou soudés, incorporés ou collés.

3. Un dispositif suivant la revendication 1, **caractérisé en ce que** le corps (2) et le distributeur d'air comprimé (3) sont réalisés en une pièce unique.

4. Un dispositif suivant la revendication 1, **caractérisé en ce que** la configuration interne de chaque chambre (10) est en forme de cône, dont la base est dirigée vers les éléments optiques de l'étalon.
